# EUROPEAN PATENT SPECIFICATION

(11) **EP 1 376 029 B1**
(45) Date of publication and mention of the grant of the patent: **11.09.2013**
(21) Application number: 03077018.4
(22) Date of filing: 27.06.2003
(51) Int. Cl.: F24J 2/52, H01L 31/042, F16M 11/00

(54) **Assembly of a support structure and a panel, in particular solar panel**
Anordnung einer Tragstruktur mit einem Paneel, insbesondere Sonnenpaneel
Assemblage d'une structure de support et d'un panneau, en particulier panneau solaire

(30) Priority: 27.06.2002 NL 1020947
(43) Date of publication of application: 02.01.2004
(73) Proprietor: SolarVolta B.V., 3881 ZK Putten (NL)
(72) Inventor: Blickman, René Johan Hendrik, 7419 BK Deventer (NL)
(74) Representative: Nederlandsch Octrooibureau

(56) References cited:
- EP-A- 0 044 379
- EP-A- 0 531 869
- EP-A- 0 857 926
- WO-A-99/10609
- WO-A1-00/12839
- DE-A1- 2 738 598
- DE-U1- 20 001 414
- DE-U1- 29 815 134
- DE-U1- 29 910 538
- FR-A- 2 305 680
- FR-A- 2 403 526
- JP-A- 2001 291 889
- NL-A- 8 203 762
- US-A- 4 226 256

## Description

The present invention relates to an assembly of a support structure and a panel. The assembly according to the present invention is suitable in particular for a solar panel.
Various systems for supporting a solar panel are known in the prior art. Such systems are generally expensive and/or complex.

DE2738598 discloses a bearing construction for reflectors, in particular parabolic mirrors. The bearing construction consists of stiff tub-shaped profiles that extend below the reflectors and wherein the reflectors are fitted.

DE29910538U1 discloses (Fig. 1) a row of coupled frames (1) (Solarwannen). The frame 1 has a circumferential rim (Umlaufende Rand) at an angle with the bottom of the frame (1). The solarpanel (5) is mounted on the circumferential rim of the frame (1). The upper and lower rim parts are provided with a channel (2) for laying therein of a cable or tube. At the ends ofthe upper and lower rim parts, a coupling-tube is laid in the channel. When mounting the solarpanel (5) on the rim, the coupling-tubes are clamped for keeping the frames (1) aligned.

WO 00/12839 relates to a frame for mounting a panel, particularly a solar (photovoltaic) panel or the like, to a roof, and also to a method of fixing such a frame to a roof and mounting a panel thereon. The frame extends beneath the entire panel.

GB 1 598 751 A (fig) discloses a solar collector, wherein the collector has a frame which is hingedly mounted at one end to one end of a flat planar metal base which can be laid on the surface of a horizontal to slightly sloping roof, the base being adapted to hold a loose roof-covering material, and wherein adjustable supports are mounted at the other end of the base for engaging the frame and holding the frame of the collector at a desired angle to the base member and thus to a roof surface. The metal base extends below the frame.

JP 2001 291889 A discloses an assembly of a support structure and a panel, according to the preamble of claim 1.

The object of the present invention is to provide an assembly, which is suitable in particular for a solar panel. In this case the object is to provide an assembly that is relatively simple in shape and is cheap to produce. That object is realised according to the present invention in that the invention provides an assembly according to claim 1.
According to the invention, it is possible for the connecting members to form an angle with the fixing elements, so that the connecting members of the fixing means on the front side of the first frame lie in line with the connecting members of the fixing means on the rear side of the second frame.
The frame according to the present invention is placed in line with a second frame that is spaced from the first frame. Couplings can subsequently be fitted between the fixing elements on the front side of the first frame and the fixing elements on the rear side of the second frame respectively. These couplings are, for example, tubes, rods or comparable elements of a fixed length. Connecting various frames to each other in this way produces a supporting structure in the case of which panels can be fitted on the top side of the fixing elements, in other words on the connecting members and the couplings connected to them.
A frame forms a module of a complete supporting structure for the panels. The frame itself is cheap. In this way a supporting structure that can be extended as desired to a desired number of positions for the panels to be placed upon them is provided. The total costs of the supporting structure in this case are relatively low.

According to the invention, the support has a space for receiving ballast between the fixing elements on the front side and the rear side respectively of said support.

It is possible here for said space for receiving ballast to be of a substantially flat design.

According to the invention, it is possible, for example, for space to be free on the support so that concrete tiles can be placed on said support. Such tiles are relatively heavy and have fixed dimensions. By adapting the size of the support to such standard dimensions of concrete tiles, it is possible to form ballast with the standard material that is commercially available, in order to fix the support on a base in an effective manner.

According to the invention the frame is formed from a sheet, the support being formed from a first part of said sheet, and the fixing elements being formed from a flanged second part and a flanged third part of said sheet respectively, which parts connect on either side of the first part. It is possible here for the connecting members to be formed from a flanged fourth and fifth part of said sheet respectively, the fourth part connecting to the second part of the sheet, and the fifth part connecting to the third part of the sheet. It is further possible for the angle between the first part and the second and the third part respectively to be greater than 90°, preferably 100°.

By these measures it is ensured that a single frame can be formed from a sheet. Such a sheet is made of, for example, metal. A suitable material for making the frame is, for example, steel.

The frame is formed from a sheet by shaping the sheet into respectively a flat support adjoining flat fixing elements on either side, which fixing elements are angled relative to the support, and connecting members, which in turn are angled with the fixing elements.

Ensuring that the fixing elements form an angle with the support means that a relatively rigid construction is formed. Furthermore, these measures mean that the frame is stackable.

According to the invention, the assembly comprises a ballast, provided on the support of at least a first frame.

According to the invention, the assembly according to the invention can be improved in that the assembly comprises a side wall that connects to the fixing elements on the front side of the first frame, the coupling, and the fixing elements on the rear side of a second frame respectively. It is possible here for the side wall to have on its underside an edge, so that ballast can be placed on it.

The assembly according to the present invention forms a supporting structure for, for example, panels. Such a supporting structure can be placed on, for example, a roof of a building or a dwelling. It must be ensured that the assembly does not blow off the roof when it is in use. The presence of ballast provides for a certain fixing of the assembly on a base. Placing side walls against the assembly helps further to reduce the wind-sensitivity of the assembly. The presence of side walls also prevents soiling of the underside of the assembly.

As mentioned above, the assembly according to the present invention is suitable in particular for having a solar panel placed upon it. In this case provision is made according to the invention for the assembly to comprise at least one panel, fitted on the connecting members of the fixing elements on the front side of a first frame and on the connecting members of the fixing elements on the rear side of a second frame. It is further possible according to the invention for the panel to comprise a solar panel.

The present invention will be described further with reference to the appended figures, in which:
Figure 1 shows a diagrammatic view, in perspective, of a number of frames according to the invention, which are placed in line with each other and are connected to each other by means of couplings.
Figure 2 shows a side view of the assembly according to Figure 1.
Figure 3 shows in detail a possible embodiment of the frame according to the present invention.

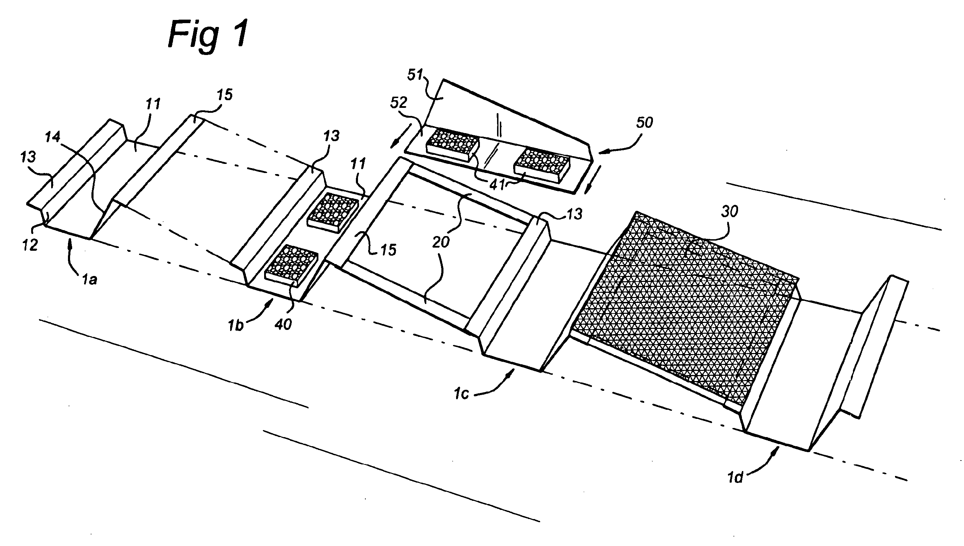

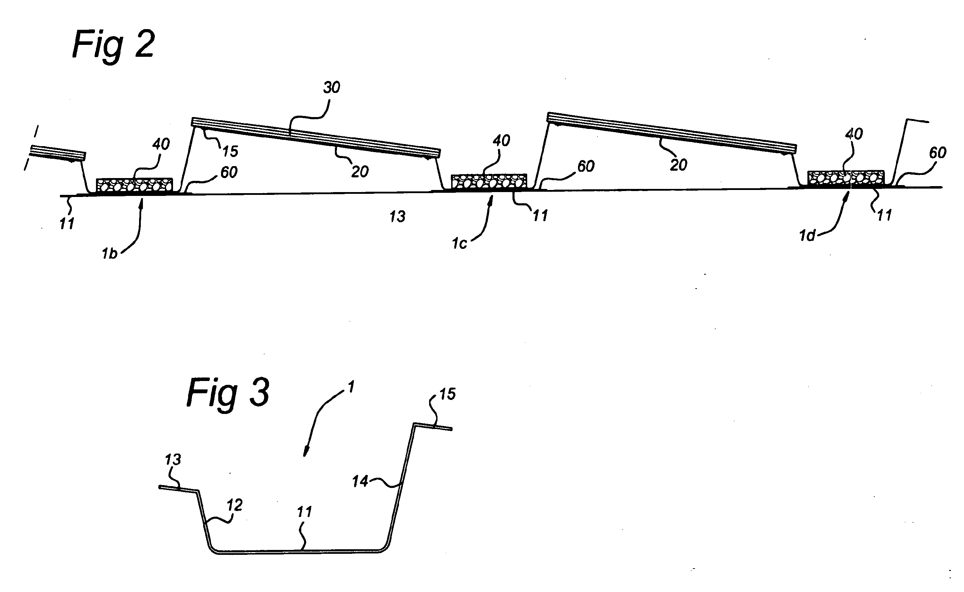

Figure 1 shows four frames 1a, 1b, 1c and 1d. A detailed illustration of a possible embodiment of such a frame 1 can be seen in Figure 3. Each of the frames 1 has a support 11 by means of which the frame 1 can be placed on a base, such as, for example, the roof of a building. A fixing element 12 is provided on the front side of the support 11. In the embodiment according to Figure 1 the fixing element 12 is formed by a flat part that connects to the support 11. A connecting member 13 is provided on the top side of the fixing element 12. This connecting member 13 is a further flat part that connects to the fixing element 12.

A second fixing element 14 is provided on the rear side of the support 11. A connecting member 15 connects to said fixing element 14.

The shape and the design of the frame 1 are such that when the various frames 1a, 1b, 1c and 1d are spaced from each other, the connecting members 13 lie in line with the connecting members 15 of adjacent frames. Dotted lines are placed between the frames 1a and 1b in Figure 1 in order to make it clear that the connecting member 15 of the frame 1a is lying in line with the connecting member 13 of the frame 1b.

The fact that the connecting members 15 are in line with the connecting members 13 of an adjacent frame means that couplings 20 can be fitted between the connecting members 15 and 13. In Figure 1 the connecting members 20 can be seen between the frames 1b and 1c. Fitting the couplings 20 between the connecting members 15 and 13 produces a supporting surface on which a panel is fitted. This is shown in Figure 1 on the right-hand side of the figure. A panel 30 is shown diagrammatically on the connecting members 15 and 13 of the frames 1c and 1d respectively. This panel 30 is, for example, a solar panel.

The frames 1a, 1b, 1c and 1d, with the couplings 20 between them, together form a supporting structure for several panels 30. Because the length of the fixing elements 12 on the front side of the supports 11 of the various frames 1 is less than that of the fixing elements 14 on the rear side of the supports 11, the panels 30 are placed at an angle with the supporting structure. Certainly if the panels 30 are in the form of solar panels, this is very advantageous for collecting solar radiation on the panel 30.

The frames 1 can be placed together on a supporting structure, such as, for example, the roof of a building. In order to prevent the various frames from slipping relative to each other and relative to the base, ballast is placed on the frames 1. This ballast can be, for example, tiles 40, as can be seen in frame 1b. Because the support 11 of the frame 1b is of a flat design, flat tiles can be placed on the support 11. These tiles are, for example, gravel tiles that are commercially available. In this way, a commercially available and cheap solution is provided for fixing the supports 1 on the base.

In order to prevent dirt from collecting underneath a panel 30, and in order to ensure that an assembly of several frames 1 and panels 30 fitted between them is not wind-sensitive, a so-called side wall 50 can be fitted against the side edge of the assembly of two connecting frames 1 and couplings 20 fitted between them. That side wall 50 comprises an upright part 51 and a wall 52 provided below it. The parts 51 and 52 can form part of a common sheet from which the side wall 50 is formed by means of a shaping process. When the frame is in use, the wall 52 can be used for the placing of ballast, such as, for example, tiles 41, on it. In order to ensure that the side wall 50 makes good contact with the adjacent frames 1, it is possible to fix the various parts to each other by means of fixing means.

A panel 30 is shown diagrammatically in Figure 1. For a good fixing of the panel 30, it is possible to slide a fillet over the panel 30, which fillet is then fixed on the various members 15, 13 and 20. In this way, it is ensured that a panel 30 is held securely on the supporting structure present underneath it.

A side view of the assembly shown in Figure 1 can be seen in Figure 2. Three frames 1b, 1c and 1d are again shown in Figure 2. The couplings 20 can be seen between the frames 1b and lc and between the frames 1c and 1d. A panel 30 is fitted on the connecting members 15 of frame 1b and 13 of lc and on the coupling 20 fitted there. As stated above, this panel 30 is secured on the supporting structure by means of a mounting profile. It can also be seen in Figure 2 that ballast in the form of a tile 40 is provided on the respective supports 11 of the various frames 1b, 1c and 1d. It will be clear that the combination of various frames 1b, 1c and 1d and couplings 20 fitted between them produces a user-friendly and relatively cheap supporting structure. The use of the frames 1 is user-friendly because the number of positions for fitting panel 30 can be extended as desired. The frames 1 can in fact not only be fitted in line, but also next to one another on a base, such as, for example, the roof of a building.

When the various frames 1 are actually placed on a building, it is advantageous according to the invention to fit an additional strip of roof covering 60 underneath the frame 1. This strip of roof covering is shown diagrammatically in Figure 2 by a bold line. The presence of this strip of roof covering ensures a better distribution of forces from the frame 1 towards the base.

A possible embodiment of a frame 1 according to the present invention is shown in Figure 3. The frame 1 is formed from a sheet of metal. Shaping of this sheet produces a frame 1 with a support 11, fixing elements 12 and 14 respectively on either side of said support, and by shaping, connecting members 13 and 15 respectively connecting to said fixing elements. In the embodiment according to Figure 3 the fixing element 12 forms an angle of 100° with the support 11. The fixing element 14 also forms an angle of 100° with the support 11. The fixing element 13 in turn forms an angle of 106° with the fixing element 12. The connecting member 15 forms an angle of 94° with the fixing element 14. By these measures it is ensured that when several frames 1 are placed in line with each other, the connecting member 15 ultimately lies in line with the connecting member 13 of the frame 1 placed next to it.

The following dimensions (in millimetres) can, for example, be used for the use of a supporting structure for solar panels. Support 11: length 443mm. Fixing element 12: length 124 mm. Fixing element 14: length 233 mm. Connecting member 13: length 100 mm. Connecting member 15: length 100 mm. Radius of curvature between support 11 and fixing element 12 or between fixing member 14 and support 11, respectively: R16.

## Claims

1. Assembly of a support structure and a panel (30), in particular solar panel, wherein the support structure comprises at least a first (1 b) and a second (1 c) frame, wherein each of said first (1 b) and second (1 c) frame comprises a support (11) for placing the frame on a base, which support (11) comprises a front side and a rear side, the support (11) having on the front side and on the rear side fixing means, which extend from the support (11) to one end thereof, wherein said fixing means comprise fixing elements (12, 14) and connecting members (13, 15), said connecting members (13, 15) connecting the fixing element (12) on the front side of the first frame (1 b) by means of couplings (20) to the fixing element (14) on the rear side of the second frame (1 c) spaced from the first frame (1 b), wherein each frame (1 b, 1 c) is formed from a sheet, the support (11) is formed from a first part of said sheet, and the fixing elements (12, 14) are formed from a flanged second part and a flanged third part of said sheet respectively, which flanged second part and flanged third part connect on either side of the first part and wherein the support (11) has a space for receiving ballast between the fixing elements (12, 14) on the front side and the rear side respectively of said support, wherein the length of the fixing elements (12) on the front side of the supports (11) is less than that of the fixing elements (14) on the rear side of the supports (11) so that said panel (30) is placed at an angle with said support (11) and wherein said panel is fitted on said connecting members (13, 15) and on said couplings (20), **characterized in that**
the angle between the first part and the second part, respectively the angle between the first part and the third part, is at least 100°, and **in that** the assembly comprises a ballast (40), provided on the support (11) of at least one of said first (1) and second (1c) frame.

2. Assembly according to claim 1, **characterized in that** the connecting members (13, 15) form an angle with the fixing elements (12, 14), so that the connecting members (13) of the fixing means on the front side of the first frame (1b) lie in line with the connecting members (15) of the fixing means on the rear side of the second frame (2c).

3. Assembly according to any of the preceding claims, **characterized in that** said space for receiving ballast is of a substantially flat design.

4. Assembly according to any of the preceding claims, **characterized in that** the connecting members (13, 15) are formed from a flanged fourth and fifth part of said sheet respectively, the fourth part connecting to the second part of the sheet, and the fifth part connecting to the third part of the sheet.

5. Assembly according to any of the preceding claims, **characterized in that** the assembly comprises a side wall (50) that connects to the fixing elements (12) on the front side of the first frame (1 b), the coupling (20), and the fixing elements (14) on the rear side of a second frame (1 c) respectively.

6. Assembly according to claim 5, **characterized in that** the side wall (50) has on its underside an edge (52), so that ballast (41) can be placed on it.

7. Assembly according to any of the preceding claims, **characterized in that** the panel (30) comprises a solar panel.

## Patentansprüche

1. Baugruppe aus einer Tragestruktur und einer Platte (30), insbesondere einer Solarzellenplatte, wobei die Tragestruktur wenigstens einen ersten (1 b) und einen zweiten (1 c) Rahmen umfasst, der erste (1b) und der zweite (1c) Rahmen jeweils eine Auflage (11) zum Auflegen des Rahmens auf ein Unterteil umfassen, wobei die Auflage (11) eine Vorderseite und eine Rückseite umfasst, die Auflage (11) an der Vorderseite und an der Rückseite Befestigungseinrichtungen aufweist, die sich von der Auflage (11) zu einem Ende derselben erstrecken, die Befestigungseinrichtungen Befestigungselemente (12, 14) und Verbindungsteile (13, 15) umfassen, die Verbindungsteile (13, 15) das Befestigungselement (12) an der Vorderseite des ersten Rahmens (1 b) mittels Verbindungen (20) mit dem Befestigungselement (14) an der Rückseite des zweiten Rahmens (1c) von dem ersten Rahmen (1 b) beabstandet verbinden, jeder Rahmen (1 b, 1 c) aus einer Tafel besteht, die Auflage (11) aus einem ersten Teil der Tafel besteht und die Befestigungselemente (12, 14) aus einem mit Flansch versehenen zweiten Teil bzw. einem mit Flansch versehenen dritten Teil der Platte bestehen, der mit Flansch versehene zweite Teil und der mit Flansch versehene dritte Teil an beiden Seiten des ersten Teils verbunden sind, die Auflage (11) einen Raum zum Aufnehmen von Ballast zwischen den Befestigungselementen (12, 14) an der Vorderseite bzw. der Rückseite der Auflage aufweist, die Länge der Befestigungselemente (12) an der Vorderseite der Auflagen (11) kleiner ist als die der Befestigungselemente (14) an der Rückseite der Auflagen (11), so dass die Platte (30) in einem Winkel zu der Auflage (11) angeordnet ist, und die Platte auf die Verbindungsteile (13, 15) und die Verbindungen (20) aufgesetzt ist, **dadurch gekennzeichnet, dass** der Winkel zwischen dem ersten Teil und dem zweiten Teil bzw. der Winkel zwischen dem ersten Teil und dem dritten Teil wenigstens 100° beträgt und dass die Baugruppe eine Ballast (40) umfasst, die an der Auflage (11) des ersten (1) oder/und des zweiten (1 c) Rahmens vorhanden ist.

2. Baugruppe nach Anspruch 1, **dadurch gekennzeichnet, dass** die Verbindungsteile (13, 15) einen Winkel mit den Befestigungselementen (12, 14) bilden, so dass die Verbindungsteile (13) der Befestigungseinrichtungen an der Vorderseite des ersten Rahmens (1b) fluchtend mit den Verbindungsteilen (15) der Befestigungseinrichtungen an der Rückseite des zweiten Rahmens (2c) sind.

3. Baugruppe nach einem der vorangehenden Ansprüche, **dadurch gekennzeichnet, dass** der Raum zum Aufnehmen von Ballast im Wesentlichen flach ausgeführt ist.

4. Baugruppe nach einem der vorangehenden Ansprüche, **dadurch gekennzeichnet, dass** die Verbindungsteile (13, 15) aus einem mit Flansch versehenen vierten bzw. fünften Teil der Platte bestehen, wobei der vierte Teil mit dem zweiten Teil der Platte verbunden ist, und der fünfte Teil mit dem dritten Teil der Platte verbunden ist.

5. Baugruppe nach einem der vorangehenden Ansprüche, **dadurch gekennzeichnet, dass** die Baugruppe eine Seitenwand (50) umfasst, die mit den Befestigungselementen (12) an der Vorderseite des ersten Rahmens (1 b), der Verbindung (20) bzw. den Befestigungselementen (14) an der Rückseite eines zweiten Rahmens (1 c) verbunden ist.

6. Baugruppe nach Anspruch 5, **dadurch gekennzeichnet, dass** die Seitenwand (50) an ihrer Unterseite eine Kante (52) aufweist, so dass Ballast (41) darauf aufgelegt werden kann.

7. Baugruppe nach einem der vorangehenden Ansprüche, **dadurch gekennzeichnet, dass** die Platte (30) eine Solarzellenplatte umfasst.

## Revendications

1. Ensemble d'une structure support et d'un panneau (30), en particulier d'un panneau solaire, la structure support comprenant au moins un premier châssis (1b) et un deuxième châssis (1c), chacun desdits premier châssis (1b) et deuxième châssis (1c) comprenant un support (11) destiné à placer le châssis sur une base, lequel support (11) comprend un côté avant et un côté arrière, le support (11) ayant sur le côté avant et sur le côté arrière des moyens de fixation qui s'étendent depuis le support (11) jusqu'à une extrémité de ce dernier, lesdits moyens de fixation comprenant des éléments de fixation (12, 14) et des organes de liaison (13, 15), lesdits organes de liaison (13, 15) reliant l'élément de fixation (12) du côté avant du premier châssis (1b), à l'aide d'accouplements (20), à l'élément de fixation (14) du côté arrière du deuxième châssis (1c) qui est espacé du premier châssis (1b), chaque châssis (1b, 1c) étant formé d'une plaque, le support (11) étant formé d'une première partie de ladite plaque, et les éléments de fixation (12, 14) étant formés respectivement d'une deuxième partie à rebord et d'une troisième partie à rebord de ladite plaque, lesquelles deuxième partie à rebord et troisième partie à rebord étant reliées aux deux côtés de la première partie, et le support (11) présentant un espace destiné à recevoir du lest entre les éléments de fixation (12, 14), respectivement sur le côté avant et sur le côté arrière dudit support, la longueur des éléments de fixation (12) situés sur le côté avant des supports (11) étant plus petite que celle des éléments de fixation (14) situés sur le côté arrière des supports (11), de sorte que ledit panneau (30) est placé en formant un angle avec ledit support (11), et ledit panneau étant monté sur lesdits éléments de liaison (13, 15) et sur lesdits accouplements (20), **caractérisé en ce que** l'angle entre la première partie et la deuxième partie, et l'angle entre la première partie et la troisième partie, respectivement, sont d'au moins 100° et **en ce que** l'ensemble comprend un lest (40) placé sur le support (11) d'au moins l'un desdits premier châssis (1) et deuxième châssis (1c).

2. Ensemble selon la revendication 1, **caractérisé en ce que** les organes de liaison (13, 15) forment un angle avec les éléments de fixation (12, 14), de telle sorte que les organes de liaison (13) des moyens de fixation situés sur le côté avant du premier châssis (1b) sont alignés avec les organes de liaison (15) des moyens de fixation situés sur le côté arrière du deuxième châssis (2c).

3. Ensemble selon l'une quelconque des revendications précédentes, **caractérisé en ce que** ledit espace destiné à recevoir du lest est de configuration sensiblement plate.

4. Ensemble selon l'une quelconque des revendications précédentes, **caractérisé en ce que** les organes de liaison (13, 15) sont formés à partir d'une quatrième et d'une cinquième parties à rebord de ladite plaque, respectivement, la quatrième partie étant reliée à la seconde partie de la plaque et la cinquième partie étant reliée à la troisième partie de la plaque.

5. Ensemble selon l'une quelconque des revendications précédentes, **caractérisé en ce que** l'ensemble comprend une paroi latérale (50) qui s'assemble aux éléments de fixation (12) situés sur le côté avant du premier châssis (1b), aux accouplements (20) et aux éléments de fixation (14) situés sur le côté arrière du second châssis (1c), respectivement.

6. Ensemble selon la revendication 5, **caractérisé en ce que** la paroi latérale (50) comporte une arête (52) sur son côté inférieur, de sorte que le lest (41) peut être placé sur cette paroi.

7. Ensemble selon l'une quelconque des revendications précédentes, **caractérisé en ce que** le panneau (30) constitue un panneau solaire.
